# EUROPEAN PATENT APPLICATION

(11) **EP 4 826 823 A1**
(43) Date of publication of application: **21.10.2026**
(21) Application number: 26172358.9
(22) Date of filing: 14.04.2026
(51) Int. Cl.: H01M 10/0562, C01B 25/14

(54) **SULFIDE-BASED SOLID ELECTROLYTE AND ALL-SOLID-STATE BATTERY INCLUDING THE SAME**

(30) Priority: 16.04.2025 KR 20250049542
(71) Applicant: SK On Co., Ltd., Seoul 03161 (KR)
(72) Inventor: PARK, Jung Hyun, 34124 Daejeon (KR); KO, Jeong Hyun, 34124 Daejeon (KR)
(74) Representative: Prüfer & Partner mbB Patentanwälte · Rechtsanwälte

(57) **Abstract**

A sulfide-based solid electrolyte is represented by Chemical Formula 1 below and has an argyrodite crystal structure.

[Chemical Formula 1] Li₇₋ₐP_{1-y}M_{y}S_{4.5-b-y}O_{b}Xₐ

In Chemical Formula 1, M is bismuth (Bi) or zirconium (Zr), X is one or more halogen elements, 1 ≤ a ≤ 2, 0 ≤ b < 1, and 0 ≤ y < 0.5 (provided that a case where both b and y are 0 is excluded).

## Description

### BACKGROUND OF THE INVENTION

### 1. Field

Various embodiments of the present disclosure generally relate to a sulfide-based solid electrolyte and an all-solid-state battery including the same, and more particularly, to a sulfide-based solid electrolyte having an argyrodite crystal structure having improved moisture stability and ionic conductivity.

### 2. Description of the Related Art

In an all-solid-state battery, not only positive and negative electrodes but also an electrolyte are all in a solid state. In other words, the all-solid-state battery is a type of battery in which a liquid electrolyte and a separator between positive and negative electrodes of the battery are replaced with a solid electrolyte, and since no flammable organic solvent is used, there is no risk of fire or explosion even when an internal short circuit occurs, so safety is maximized or enhanced and the size may be reduced. In addition, the all-solid-state battery has the characteristics of not only being superior in manufacturing cost and productivity, but also being able to achieve high voltage by stacking electrode assemblies in series in the all-solid-state battery.

In addition, in the above-described solid electrolyte, no side reactions are generated due to the movement of anions other than Li ions, which is expected to improve safety and durability. The above-described all-solid-state battery may improve safety compared to conventional lithium-ion batteries using liquid electrolytes.

Solid electrolytes may be classified as polymer-based, sulfide-based, and oxide-based electrolytes. Among these solid electrolytes, as oxide-based solid electrolytes, Lithium Aluminum Titanium Phosphate (LATP) (Li_{1.3}Al_{0.3}Ti_{1.7} (PO₄)₃) -based, Lithium Lanthanum Titanate (LLTO) (Li₃ₓLa_{2/(3-x)}TiO₃) -based, and Lithium Lanthanum Zirconate (LLZO) (Li₇La₃Zr₂O₁₂) -based electrolytes are widely known, and these oxide-based solid electrolytes have higher stability compared to sulfide-based solid electrolytes, but have lower ionic conductivity.

Sulfide-based solid electrolytes include amorphous sulfide-based solid electrolytes and crystalline sulfide-based solid electrolytes. Various structures and compositions are known, such as Lithium Germanium Phosphorus Sulfide (LGPS) (Li₁₀GeP₂S₁₂), Lithium Silicon Phosphorus Sulfide Chloride (LSPSCl) (Li_{9.54}Si_{1.7}P_{1.44}S_{11.7}Cl_{0.3}) , Li₆PS₅Cl argyrodite, Li₂S-P₂S₅, thio-Lithium Super Ionic CONductor (thio-LISICON, and Li-M-P-S (M= Si, Ge, Sn). Compared to oxide ions, sulfide ions in sulfide-based solid electrolytes have wider interstitial sites between anions, which serve as ionic conduction paths. Moreover, due to the high polarizability of sulfide ions, the binding force on lithium ions is weak, allowing the lithium ions to move easily. As a result, sulfide-based solid electrolytes exhibit higher ionic conductivity compared to oxide-based solid electrolytes.

### SUMMARY OF THE INVENTION

In an embodiment of the present disclosure, a sulfide-based solid electrolyte having high moisture stability and ionic conductivity is provided.

In an embodiment of the present disclosure, an all-solid-state battery having high moisture stability and ionic conductivity is provided.

The present disclosure can be widely applied in the green technology fields such as electric vehicles, battery charging stations, energy storage systems (ESSs), and other technologies using batteries such as photovoltaics and wind power. Furthermore, a sulfide-based solid electrolyte according to the present disclosure may be used for eco-friendly mobility, including electric and hybrid vehicles, to reduce air pollution and greenhouse fluid emissions to prevent or mitigate climate change.

An embodiment of the present disclosure may provide a sulfide-based solid electrolyte represented by Chemical Formula 1 below and having an argyrodite crystal structure.

[Chemical Formula 1] Li₇₋ₐP_{1-y}M_{y}S_{4.5-b-y}O_{b}Xₐ

In Chemical Formula 1, M may be bismuth (Bi) or zirconium (Zr), X may be one or more halogen elements, 1 ≤ a ≤ 2, 0 ≤ b < 1, and 0 ≤ y < 0.5 (provided that a case where both b and y are 0 is excluded) .

In an embodiment, the argyrodite crystal structure may include BiS₄ or ZrS₄.

In an embodiment, oxygen (0) may be substituted at a 16e site of sulfur (S) in the crystal structure.

In an embodiment, the argyrodite crystal structure may include PS₃O or PS₂O₂.

In an embodiment, the sulfide-based solid electrolyte may be represented by Chemical Formula 2 or Chemical Formula 3 below.

[Chemical Formula 2] Li₇₋ₐP_{1-y}Bi_{y}S_{4.5-b-y}O_{b}Xₐ

[Chemical Formula 3] Li₇₋ₐP_{1-y}Zr_{y}S_{4.5-b-y}O_{b}Xₐ

In Chemical Formulae 2 and 3, X may be one or more halogen elements, 1 ≤ a ≤ 2, 0 ≤ b < 1, and 0 < y < 0.5.

In an embodiment, a sum of b and y may be less than 0.5 (b + y < 0.5).

In an embodiment, a may be from 1.5 to 2.

In an embodiment, the sulfide-based solid electrolyte may be represented by Chemical Formula 4 below.

[Chemical Formula 4] Li₇₋ₐP_{1-y}M_{y}S_{4.5-b-y}O_{b}X1₂₋ₐ₂X2ₐ₂

In Chemical Formula 4, M may be bismuth (Bi) or zirconium (Zr), X1 may be Cl, X2 may be Br, 1 ≤ a ≤ 2, 0 ≤ b < 1, 0 ≤ y < 0.5, and 0 ≤ a2 ≤ 2 (provided that a case where both b and y are 0 is excluded).

In an embodiment, Chemical Formula 1 may be Li₇₋ₐP_{1-y}M_{y}S_{4.5-b-y}O_{b}C1ₐ, Li₇₋ₐP_{1-y}Bi_{y}S_{4.5-b-y}O_{b}C1ₐ, Li₇₋ₐP_{1-y}Zr_{y}S_{4.5-b-y}O_{b}C1ₐ, Li_{5.5}P_{1-y}M_{y}S_{4.5-b-y}O_{b}C1_{1.5}, Li_{5.5}P_{1-y}Bi_{y}S_{4.5-b-y}O_{b}C1_{1.5}, or L1_{5,5}P_{1-y}Zr_{y}S_{4.5-b-y}O_{b}C1_{1.5}.

An embodiment may provide a sulfide-based solid electrolyte having an argyrodite crystal structure and including lithium (Li), phosphorus (P), sulfur (S), and a halogen element, in which at least some of sites of the phosphorus (P) are substituted with one or more of bismuth (Bi) and zirconium (Zr), at least some of sites of the sulfur (S) are substituted with oxygen (O), and a molar ratio of the lithium (Li) to the halogen element (lithium: halogen element) is 7-a: a (1 ≤ a ≤ 2).

An embodiment may provide a method of preparing a sulfide-based solid electrolyte represented by Chemical Formula 1 below, and the method may include mixing and pulverizing lithium sulfide (Li₂S), phosphorus pentasulfide (P₂S₅), a lithium halide (LiX), and elemental sulfur (S); and one or more of bismuth trioxide (Bi₂O₃) or zirconium tetrachloride (ZrCl₄) in an inert atmosphere; and heat-treating the pulverized material in an inert atmosphere.

[Chemical Formula 1] Li₇₋ₐP_{1-y}M_{y}S_{4.5-b-y}O_{b}Xₐ

In Chemical Formula 1, M may be bismuth (Bi) or zirconium (Zr), X may be one or more halogen elements, 1 ≤ a ≤ 2, 0 ≤ b < 1, and 0 ≤ y < 0.5 (provided that a case where both b and y are 0 is excluded) .

An embodiment may provide an all-solid-state battery including the sulfide-based solid electrolyte according to an embodiment.

A sulfide-based solid electrolyte according to an embodiment of the present disclosure may have high moisture stability and ionic conductivity.

An all-solid-state battery according to an embodiment of the present disclosure may have high moisture stability and ionic conductivity.

### BRIEF DESCRIPTION OF THE DRAWINGS

FIG. 1 is a graph showing relative energy when oxygen (0) is substituted at 16e, 4a, and 4d sulfur (S) sites in a crystal structure;
FIGS. 2A, 2B, and 2C are diagrams illustrating ion mixing of sulfur (S) and chlorine (Cl) in a crystal structure and a resulting change in ionic conductivity;
FIGS. 3 and 4 show Scanning Electron Microscopy-Energy Dispersive X-ray Spectroscopy (SEM-EDS) results of a sulfide-based solid electrolyte synthesized according to Example of the present disclosure;
FIG. 5 shows X-ray Photoelectron Spectroscopy (XPS) surface analysis results for a sulfide-based solid electrolyte synthesized according to Example of the present disclosure; and
FIG. 6 shows Phosphorus-31 Magic Angle Spinning Nuclear Magnetic Resonance (³¹P-MAS NMR) measurement results for sulfide-based solid electrolytes synthesized in Examples of the present disclosure and Comparative Example.

### DETAILED DESCRIPTION

Hereinafter, embodiments of the present disclosure will be described in detail. However, this is by way of example only and the present disclosure is not limited to the specific embodiments described herein.

Unless otherwise specified, for any property mentioned in the present disclosure that is affected by measurement temperature, the property is measured at room temperature.

As used herein, the term "room temperature" refers to the natural, unheated, and uncooled temperature, for example, any temperature in the range of 10 °C to 30 °C, such as about 15 °C or higher, about 18 °C or higher, about 20 °C or higher, about 23 °C or higher, about 27 °C or lower, or 25 °C. Unless otherwise specified, the unit of temperature is degrees Celsius (°C).

Unless otherwise specified, for any property mentioned in the present disclosure that is affected by measurement pressure, the property is measured at atmospheric pressure.

As used herein, the term "atmospheric pressure" refers to a natural pressure without being pressurized or depressurized, typically in the range of about 700 mmHg to about 800 mmHg.

As used herein, the expression "a to b" or "from a to b" means a range between a and b, inclusive of the endpoints a and b. For example, "included in an amount of a to b parts by weight" is equivalent to meaning included within the range of a to b parts by weight.

As used herein, the term "battery" may be used interchangeably with "battery cell." The term "battery" or "battery cell" may collectively refer to a battery cell as a unit, or a battery module or a battery pack including one or more of the battery cells. Further, in the present disclosure, an all-solid-state battery may be one of various types of the battery cells and may include a solid electrolyte. In addition, the solid electrolyte may be in a solid state at room temperature.

As used herein, the term "all-solid-state battery" is used merely in accordance with common practice in the art, and the all-solid-state battery may, in some cases, include any liquid or vapor-state material.

Specific structural or functional descriptions disclosed herein are merely illustrative for the purpose of describing embodiments according to the technical spirit of the present disclosure. Embodiments according to the technical spirit of the present disclosure may be implemented in various forms in addition to the embodiments disclosed herein, and should not be construed as being limited to the specific embodiments set forth herein.

An embodiment of the present disclosure relates to a sulfide-based solid electrolyte having an argyrodite crystal structure (hereinafter also referred to as a sulfide-based solid electrolyte) .

The sulfide-based solid electrolyte having the argyrodite crystal structure according to an embodiment of the present disclosure may be represented by the following Chemical Formula 1.

[Chemical Formula 1] Li₇₋ₐP_{1-y}M_{y}S_{4.5-b-y}O_{b}Xₐ

In Chemical Formula 1 above, M is bismuth (Bi) or zirconium (Zr), X is a halogen element, 1 ≤ a ≤ 2, 0 ≤ b < 1, and 0 ≤ y < 0.5 (provided that a case where both b and y are 0 is excluded).

The sulfide-based solid electrolyte having the argyrodite crystal structure according to an embodiment of the present disclosure may include lithium (Li), phosphorus (P), sulfur (S), and halogen elements. In the sulfide-based solid electrolyte, at least some of sites of phosphorus (P) may be substituted with one or more of bismuth (Bi) and zirconium (Zr), and at least some of sites of sulfur (S) may be substituted with oxygen (O). In the sulfide-based solid electrolyte, a molar ratio of lithium (Li) to the halogen elements may be 7-a: a (1 ≤ a ≤ 2).

The sulfide-based solid electrolyte according to an embodiment of the present disclosure may be used in an all-solid-state lithium secondary battery (hereinafter, all-solid-state battery). Specifically, the sulfide-based solid electrolyte according to an embodiment of the present disclosure may form a solid electrolyte layer of the all-solid-state battery, and may be used as a solid electrolyte to be mixed with one or more of a positive electrode mixture and a negative electrode mixture.

In general, a sulfide-based solid electrolyte having an argyrodite crystal structure and belonging to a Li-P-S-Cl system has characteristics of being vulnerable to moisture. When such a sulfide-based solid electrolyte is exposed to moisture, it is readily decomposed into Li₃P or Li₃PO₄ and Li₂S, resulting in a decrease in ionic conductivity and a significant deterioration in the electrochemical performance of a secondary battery. In order to improve the moisture stability of sulfide-based solid electrolytes, various approaches have been studied, such as introducing moisture-capturing additives, forming a moisture-resistant coating layer, or controlling the composition.

An embodiment of the present disclosure improves moisture stability by controlling the composition of a sulfide-based solid electrolyte. In the sulfide-based solid electrolyte, chemical bonding between elements may be strengthened (stability increased) to suppress or reduce moisture-induced decomposition of the electrolyte. The composition control according to an embodiment of the present disclosure will be described in more detail below, but is not limited thereto.

According to an embodiment of the present disclosure, M in Chemical Formula 1 above may be bismuth (Bi) or zirconium (Zr).

In the argyrodite crystal structure of the sulfide-based solid electrolyte, some of the phosphorus (P) sites in a PS₄ structure may be substituted with bismuth (Bi) or zirconium (Zr). The argyrodite crystal structure (or crystal structure) may include BiS₄ or ZrS₄.

In Chemical Formula 1 above, y may be 0 to less than 0.5 (0 ≤ y < 0.5). However, y may be greater than 0 when b is 0. In an embodiment, y may be greater than 0. Specifically, y may be greater than 0 and less than 0.5 (0 < y < 0.5). More specifically, y may be 0.05 to 0.2, 0.05 to 0.1, or 0.1 to 0.2. Further, in an embodiment, y may be 0.05, 0.1, 0.2, 0.4, or the like. When y is outside the above range, moisture stability may deteriorate, and ionic conductivity may be significantly reduced, which may adversely affect the performance.

In the crystal structure of the sulfide-based solid electrolyte according to the present embodiment, BiS₄ formed by introducing bismuth (Bi) into the PS₄ structure may have a higher hydrolysis energy compared to PS₄. When PS₄ and BiS₄ come into contact with moisture (H₂O), H₂O molecules may be decomposed as shown in Reaction Formula 1 and Reaction Formula 2 below. The decomposition of the H₂O molecules generates intermediate products on the surface of the sulfide-based solid electrolyte, and decomposes the PS₄ tetrahedron and BiS₄ tetrahedron, thereby generating toxic H₂S gas.

Here, the energy required for the decomposition reaction of the BiS₄ tetrahedron is higher than the energy required for the decomposition reaction of the PS₄ tetrahedron, and since the energy required for such a reaction is higher, moisture stability of the sulfide-based solid electrolyte may be improved when the bismuth (Bi) is introduced into the PS₄ structure.

[Reaction Formula 1] PS₄ + H₂O → PS₃O + H₂S (decomposition reaction energy = -0.95 eV)

[Reaction Formula 2] BiS₄+ H₂O → BiS₃O + H₂S (decomposition reaction energy = 0.59 eV)

Referring to Reaction Formula 1 and Reaction Formula 2, the decomposition reaction energy of the BiS₄ tetrahedron is 0.59 eV, which is higher by 1.54 eV compared to the decomposition reaction energy of the PS₄ tetrahedron (-0.95 eV). Therefore, a sulfide-based solid electrolyte including BiS₄ tetrahedron, as in the present embodiment, may exhibit higher moisture stability compared to a sulfide-based solid electrolyte including the PS₄ tetrahedron alone.

Furthermore, Bi⁵⁺ may have a relatively larger ionic size, and the BiS₄ tetrahedron may induce distortion of the PS₄ tetrahedron, and may also be deactivated by itself. Specifically, Bi may also induce the formation of S-S chemical bonds without direct interaction with non-bonding S orbitals, thereby improving moisture stability.

Zirconium (Zr) belongs to a soft acid compared to phosphorus (P), which is a hard acid. Based on the Hard and Soft Acids and Bases (HSAB) theory, zirconium (Zr), which is a soft acid, has a lower reactivity with oxygen, which is a hard base, than phosphorus (P). In the crystal structure of the sulfide-based solid electrolyte according to the present embodiment, ZrS₄ introduced by substitution of zirconium (Zr) into the PS₄ structure has lower reactivity with moisture compared to PS₄, and as a result, may be stably maintained in an environment containing moisture.

The sulfide-based solid electrolyte according to an embodiment may be represented by Chemical Formula 2 or Chemical Formula 3 below.

[Chemical Formula 2] Li₇₋ₐP_{1-y}Bi_{y}S_{4.5-b-y}O_{b}Xₐ

[Chemical Formula 3] Li₇₋ₐP_{1-y}Zr_{y}S_{4.5-b-y}O_{b}Xₐ

In Chemical Formula 2 or Chemical Formula 3 above, X is one or more halogen elements, wherein 1 ≤ a ≤ 2, 0 ≤ b < 1, and 0 < y < 0.5.

In the crystal structure of the sulfide-based solid electrolyte according to the present embodiment, oxygen (O) may be introduced into the argyrodite crystal structure.

When oxygen (O) is introduced into the argyrodite crystal structure, the oxygen (O) may occupy a site of sulfur (S) having a similar valence in the argyrodite structure. In Chemical Formula 1 above, b may be from 0 to less than 1 (0 ≤ b < 1). However, when y is 0, b may be greater than 0 (0 < b < 1). In an embodiment, b may be greater than 0. Further, b may be, 0.05 to 0.3, or 0.2 to 0.5. Further, in an embodiment, b may be 0.0625, 0.125, 0.25, 0.5, or the like. When b is outside the above range, ionic conductivity may rapidly deteriorate, and moisture stability may be reduced.

In a unit cell of the argyrodite crystal structure, sulfur (S) is located at three sites, 16e, 4a, and 4d, and oxygen (0) may substitute for sulfur (S) at each of the sites in numbers of 16, 1, and 1, respectively. In an embodiment, oxygen (0) may be substituted at the sulfur site of a PS₄ unit, which is the 16e site. Accordingly, the argyrodite crystal structure in which oxygen (O) is substituted may exhibit the most thermodynamically stable structure. Specifically, oxygen (O) may be substituted at a 16e site of sulfur (S) in the crystal structure.

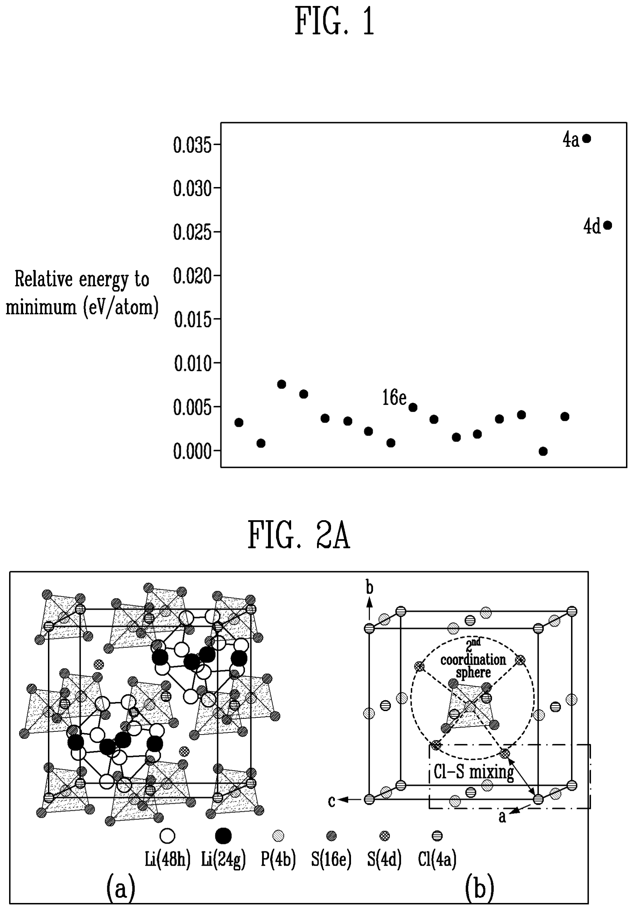

FIG. 1 is a graph showing relative energy when oxygen (O) is substituted at the 16e, 4a, and 4d sulfur (S) sites in the crystal structure. Referring to FIG. 1, it can be seen that the structure is thermodynamically most stable when sulfur (S) at the 16e site, among the 16e, 4a, and 4d sites of the PS₄ unit, is substituted with oxygen (0).

When oxygen (0) is introduced into the PS₄ unit structure, the argyrodite crystal structure may include PS₃O and/or PS₂O₂. For such PS₃O and/or PS₂O₂ units, the hydrolysis energy may be increased, thereby reducing reactivity with moisture. In addition, the P-O bond energy (596 kJ/mol) is higher than the P-S bond energy (346 kJ/mol), and thus may exhibit relatively low decomposability even upon contact with moisture.

When a typical argyrodite crystal comes into contact with moisture, water (H₂O) molecules may decompose to form intermediate products on the surface, and may decompose the PS₄ tetrahedron, thereby generating toxic H₂S gas. In contrast, oxygen (O₂) molecules, unlike water (H₂O) molecules, may form hybridization with non-bonding orbitals of sulfur (S), and as a result, may readily bind to the surface of the argyrodite crystal, thereby suppressing or reducing generation of H₂S.

In an embodiment, the sum of a molar ratio of M (bismuth (Bi) or zirconium (Zr)) and a molar ratio of oxygen (O) may be less than 0.5 (b + y < 0.5). In the aforementioned range, an S-rich composition provided with an excess molar ratio of S may induce a disordered structure, thereby reducing the activation energy required for lithium-ion migration and improving ionic conductivity. In contrast, when S is excessively included, substances such as Li₂S may be formed, which may degrade electrode interfacial reactivity. In an embodiment, the molar ratio of sulfur (S) may be greater than 4.0, and may be 4.2 or more, 4.3 or more, or 4.45.

In Chemical Formula 1 above according to an embodiment, X may be a halogen element. The halogen element may be Cl, Br, or I. a may be from 1 to 2 (1 ≤ a ≤ 2). In an embodiment, a may be 1 to 1.5. Alternatively, a may be 1 to 1.5, 1.5 to 2, or 1.5 to 1.8. Further, a may be 1.2, 1.5, 1.8, or 2. When a is outside the above range, ionic conductivity may deteriorate. Specifically, when a is greater than 1.5, the halogen element, such as Cl, may be introduced into the site where S₂ should originally be located (24g site), and anion site disorder may increase. In addition, when a is greater than 1.5, the stability of the crystal structure may deteriorate. An excessive Cl⁻ content may excessively substitute for S²⁻, leading to negative charge accumulation, increasing lattice energy and causing phase separation. Accordingly, a Li-hopping path may be expanded and thus the energy barrier is reduced, thereby improving ionic conductivity. In contrast, when Cl is greater than or equal to 1.6, greater than or equal to 1.7, or greater than or equal to 1.8, LiCl may be generated as a side reaction, and the generated LiCl may act as a resistance component, decreasing ionic conductivity. More specifically, Cl may be 1.5.

The sulfide-based solid electrolyte of Chemical Formula 1 according to an embodiment may be Li₇₋ₐP_{1-y}M_{y}S_{4.5-b-y}O_{b}C1ₐ, or Li₇₋ₐP_{1-y}Bi_{y}S_{4.5-b-y}O_{b}C1ₐ, Li₇₋ₐP_{1-y}Zr_{y}S_{4.5-b-y}O_{b}C1ₐ, or Li_{5.5}P_{1-y}M_{y}S_{4.5-b-y}O_{b}C1_{1.5}, or Li_{5.5}P_{1-y}Bi_{y}S_{4.5-b-y}O_{b}C1_{1.5}, or Li_{5.5}P_{1-y}Zr_{y}S_{4.5-b-y}O_{b}C1_{1.5}. a, y, and b are as described above.

In an embodiment, two or more halogen elements (X) may be included. In an embodiment, the sulfide-based solid electrolyte may be represented by Chemical Formula 4 below. In Chemical Formula 4 below, X1 may be chlorine (Cl), and X2 may be bromine (Br).

[Chemical Formula 4] Li₇₋ₐP_{1-y}M_{y}S_{4.5-b-y}O_{b}X1₂₋ₐ₂X2ₐ₂

In Chemical Formula 4 above, M may be bismuth (Bi) or zirconium (Zr), X1 may be Cl, X2 may be Br, 1 ≤ a ≤ 2, 0 ≤ b < 1, 0 ≤ y < 0.5, and 0 ≤ a2 ≤ 2 (provided that a case where both b and y are 0 is excluded).

In the sulfide-based solid electrolyte, ionic conductivity may be improved as the content of the halogen element increases. According to an embodiment, S and Cl having similar sizes within the crystal structure of the sulfide-based solid electrolyte may undergo site exchange, and lithium ionic conductivity in an all-solid-state battery may be improved through ion mixing of S and Cl.

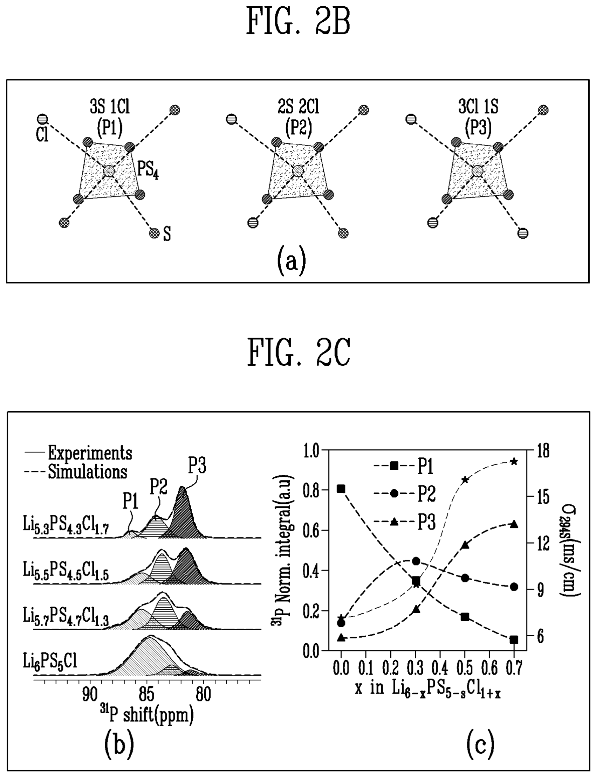

FIGS. 2A, 2B, and 2C are diagrams illustrating ion mixing of sulfur (S) and chlorine (Cl) in a crystal structure and a resulting change in ionic conductivity. FIG. 2 illustrates ion mixing in an argyrodite-based crystal structure (see Xuyong Feng et al., "Enhanced ion conduction by enforcing structural disorder in Li-deficient argyrodites Li6-xPS5-xC11+x," Energy Storage Materials 30 (2020) 67-73).

Referring to FIG. 2A, in an argyrodite crystal structure, sulfur (S) at the 4d site and chlorine (Cl) at the 4a site may have similar ion radius sizes, and ion mixing (Cl-S mixing) between the sulfur (S) and the chlorine (Cl) may occur. As the Cl-S mixing increases, structural disorder within the crystal structure may increase, thereby increasing the diffusion rate of lithium ions and improving ionic conductivity. Furthermore, as a molar ratio of chlorine increases, the Cl-S mixing phenomenon may become more active.

Referring to FIG. 2B, an electronic environment may be changed depending on the number of Cl atoms capable of second-shell coordination based on phosphorus (P) of PS₄ unit. FIG. 2C shows graphs illustrating a degree of structural separation of P according to ion mixing of sulfur (S) and chlorine (Cl). As the ion mixing of sulfur (S) and chlorine (Cl) increases, the structural separation ratios of P₁, P₂, and P₃ increases, and thus ionic conductivity may be improved.

The sulfide-based solid electrolyte according to an embodiment of the present disclosure may include, but not limited to, Li_{5.5}P_{0.95}Bi_{0.05}S_{4.325}O_{0.125}Cl_{1.5}, Li_{5.5}P_{0.9}Bi_{0.1}S_{4.275}O_{0.125}Cl_{1.5}, Li_{5.5}P_{0.8}Bi_{0.2}S_{4.175}O_{0.125}Cl_{1.5}, Li_{5.5}PS_{4.4375}O_{0.0625}Cl_{1.5}, Li_{5.5}PS_{4. 375}O_{0.125}Cl_{1.5}, Li_{5.5}PS_{4.25}S_{0.25}Cl_{1.5}, Li_{5.5}PS_{4.0}O_{0.5}0Cl_{1.5}, Li_{5.5}P_{0.95}Bi_{0.05}S_{4.45}Cl_{1.5}, Li_{5.5}P_{0.9}Bi_{0.1}S_{4.4}Cl_{1.5}, Li_{5.5}P_{0.8}Bi_{0.2}S_{4.3}Cl_{1.5}, or Li_{5.5}P_{0.95}Zr_{0.05}S_{4.325}O_{0.125}Cl_{1.5}.

An embodiment of the present disclosure relates to a method of preparing a sulfide-based solid electrolyte. The sulfide-based solid electrolyte may be represented by the following Chemical Formula 1, as described above.

[Chemical Formula 1] Li₇₋ₐP_{1-y}M_{y}S_{4.5-b-y}O_{b}Xₐ

In Chemical Formula 1 above, M is bismuth (Bi) or zirconium (Zr), X is one or more halogen elements, 1 ≤ a ≤ 2, 0 ≤ b < 1, and 0 ≤ y < 0.5 (provided that a case where both b and y are 0 is excluded).

The method of preparing the sulfide-based solid electrolyte according to an embodiment of the present disclosure may include pulverizing a starting material in an inert atmosphere, and heat-treating the pulverized material in an inert atmosphere.

The starting material may be provided by mixing lithium sulfide (Li₂S), phosphorus pentasulfide (P₂S₅), a lithium halide (LiX), and elemental sulfur (S); and one or more of bismuth trioxide (Bi₂O₃) or zirconium tetrachloride (ZrCl₄). The elemental sulfur (S) may refer to a simple substance sulfur (S) that consists of a single element and exhibits unique chemical properties.

The content of the starting material may be used after being stoichiometrically calculated according to a chemical formula of a sulfide-based solid electrolyte to be finally prepared. The pulverizing time of the starting material is not particularly limited thereto, but may be performed for 15 hours to 24 hours. The heat-treatment temperature of the pulverized powder may be 500 °C to 550 °C, and the heat treatment may be performed for 4 hours to 6 hours.

An embodiment of the present disclosure relates to an all-solid-state battery including a sulfide-based solid electrolyte having an argyrodite crystal structure. The sulfide-based solid electrolyte is as described above.

The sulfide-based solid electrolyte according to an embodiment of the present disclosure may be used in an all-solid-state battery. Specifically, the sulfide-based solid electrolyte according to an embodiment of the present disclosure may constitute a solid electrolyte layer of an all-solid-state battery, or may be used as a solid electrolyte mixed into a positive electrode mixture and a negative electrode mixture.

According to an embodiment, an all-solid-state battery may include a positive electrode, a negative electrode, and an electrolyte layer formed between the positive and negative electrodes, and including the sulfide-based solid electrolyte.

As methods of preparing the electrolyte layer including the solid electrolyte, methods known in the art may be used. For example, but not limited to, the electrolyte layer including the solid electrolyte may be prepared by forming a coating film using a slurry including a sulfide-based solid electrolyte, a binder, and a solvent. For example, the slurry may be applied onto a substrate and spread by doctor blading or the like, by contacting the substrate with the slurry followed by cutting with an air knife, or by screen printing to form a film, followed by heat-drying to remove the solvent. Alternatively, the electrolyte layer may be prepared by pressing a powder of the solid electrolyte to form a compact body using a press or the like, followed by processing the compact body.

According to an embodiment, the positive electrode mixture of the all-solid-state battery is not particularly limited, and a positive electrode material that is used as a positive electrode active material for a lithium secondary battery using a liquid electrolyte may be used. Examples thereof include, but are not limited to, a spinel-type lithium transition metal oxide, a lithium transition metal oxide with a layered structure, an olivine-type lithium transition metal oxide with, or a mixture of two or more thereof.

According to an embodiment, the negative electrode mixture of the all-solid-state battery is not particularly limited, and a negative electrode material that is used as a negative electrode active material for a lithium secondary battery using a liquid electrolyte may be used. Examples thereof include, but not limited to, carbon-based materials such as artificial graphite, natural graphite, and non-graphitizable carbon (hard carbon); silicon-based materials including silicon or silicon oxide; lithium metal; or the like may be used.

In the case of a sulfide-based solid electrolyte, the sulfide-based solid electrolyte may be degraded in a process of preparing an all-solid-state battery due to the vulnerability to moisture of the sulfide-based solid electrolyte, thereby also degrading the electrochemical performance of the all-solid-state battery.

To avoid this phenomenon, assembly may only be performed in a specialized dry room (dew point -60 °C), which accordingly increases costs and makes industrial-scale production difficult.

However, the sulfide-based solid electrolyte according to an embodiment of the present disclosure has high moisture stability and ionic conductivity, enabling all-solid-state batteries to be prepared under a low dew point condition.

Hereinafter, the present disclosure will be described in more detail with reference to Examples according to an embodiment of the present disclosure, but such Examples are not intended to limit the scope of the present disclosure.

### 1. Preparation Examples, Examples, and Comparative Example

### Preparation Example 1

Lithium sulfide (Li₂S) , phosphorus pentasulfide (P₂S₅), lithium chloride (LiCl), and bismuth trioxide (Bi₂O₃), as well as elemental sulfur (S) were each prepared as starting materials in a glove box under an argon (Ar) atmosphere. Each starting material was weighed by stoichiometric control to obtain a compound having a target composition including Li₂S, P₂S₅, LiCl, and Bi₂O₃, and then pulverized in a planetary ball mill containing zirconia balls at 400 rpm for 20 hours under an Ar atmosphere. After the pulverization, a sulfide-based solid electrolyte in a powder form was recovered by appropriate sieving and mortar grinding. The recovered powder was then heat-treated at a temperature of about 550 °C for about 5 hours in an Ar atmosphere. After the heat treatment, the sulfide-based solid electrolyte in the powder form was recovered again by appropriate sieving and mortar grinding.

### Preparation Example 2

Lithium sulfide (Li₂S), phosphorus pentasulfide (P₂S₅) , lithium chloride (LiCl), and zirconium (ZrCl₄), as well as elemental sulfur (S) were each prepared as starting materials in a glove box under an argon (Ar) atmosphere. Lithium oxide (Li₂O) was used as an oxygen source. Each starting material was weighed by stoichiometric control to obtain a compound having a target composition including Li₂S, P₂S₅, LiCl, and ZrCl₄, and then pulverized in a planetary ball mill containing zirconia balls at 400 rpm for 20 hours under an Ar atmosphere. After the pulverization, a sulfide-based solid electrolyte in a powder form was recovered by appropriate sieving and mortar grinding. The recovered powder was then heat-treated at a temperature of about 550 °C for about 5 hours in an Ar atmosphere. After the heat treatment, the sulfide-based solid electrolyte in the powder form was recovered again by appropriate sieving and mortar grinding.

### Examples 1 to 11, and Comparative Example

A sulfide-based solid electrolyte having a chemical formula shown in Table 1 below was prepared according to Preparation Example 1 or Preparation Example 2 above.

**[Table 1]**

| Category | Chemical Formula | Presence of Oxygen (O: Present, -: Absent) | M | b | y |
|---|---|---|---|---|---|
| Example 1 | Li_{5.5}P_{0.95}Bi_{0.05}S_{4.325}O_{0.125} Cl_{1.5} | O | Bi | 0.125 | 0.05 |
| Example 2 | Li_{5.5}P_{0.9}Bi_{0.1}S_{4.275}O_{0.125}C I_{1.5} | O | Bi | 0.125 | 0.1 |
| Example 3 | Li_{5.5}P_{0.8}Bi_{0.2}S_{4.175}O_{0.125}C I_{1.5} | O | Bi | 0.125 | 0.2 |
| Example 4 | Li_{5.5}PS_{4.4375}O_{0.0625}Cl_{1.5} | O | - | 0.0625 0.0625 | |
| Example 5 | Li_{5.5}PS_{4.375}O_{0.125}Cl_{1.5} | O | - | 0.125 0.125 | |
| Example 6 | Li_{5.5}PS_{4.25}O_{0.25}Cl_{1.5} | O | - | 0.25 | - |
| Example 7 | Li_{5.5}PS_{4.0}O_{0.50}Cl_{1.5} | O | - | 0.50 | - |
| Example 8 | Li_{5.5}P_{0.95}Bi_{0.05}S_{4.45}Cl_{1.5} | - | Bi | - | 0.05 |
| Example 9 | Li_{5.5}P_{0.9}Bi_{0.1}S_{4. 4}Cl_{1.5} | - | Bi | - | 0.1 |
| Example 10 | Li_{5.5}P_{0.8}Bi_{0.2}S_{4.3}Cl_{1.5} | - | Bi | - | 0.2 |
| Example 11 | Li_{5.5}P_{0.95}Zr_{0.05}S_{4.325}O_{0.125} Cl_{1.5} | O | Zr | 0.125 | 0.05 |
| Comparativ e Example | Li_{5.5}PS_{4.5}Cl_{1.5} | - | - | - | - |

### 2. Evaluation of Examples and Comparative Example

### (1) Composition of Sulfide-Based Solid Electrolyte

The composition of the sulfide-based solid electrolyte synthesized in the above Examples was confirmed.

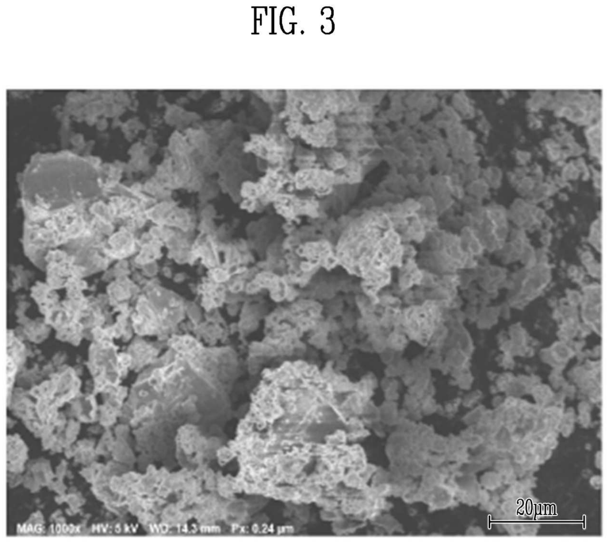

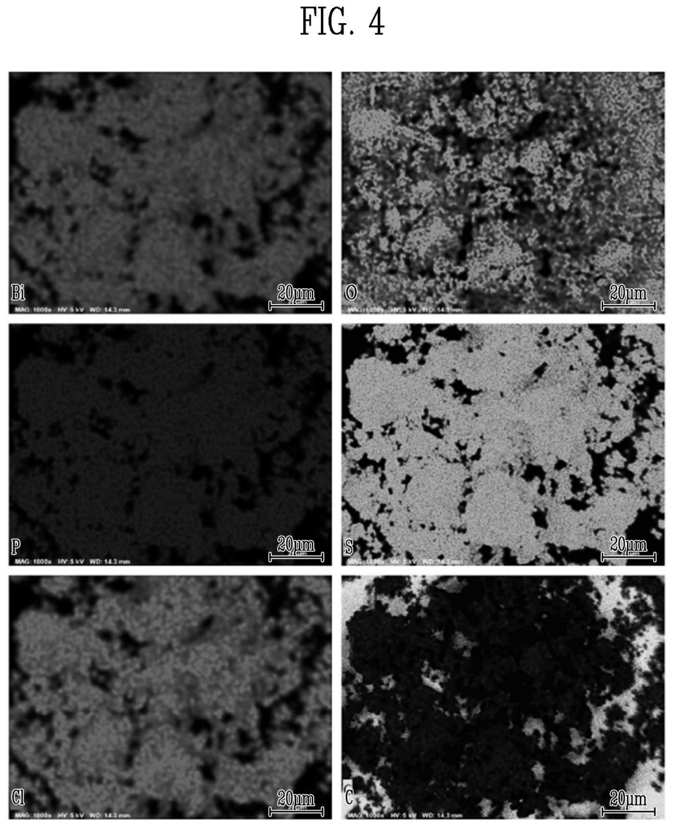

FIGS. 3 and 4 show Scanning Electron Microscopy-Energy Dispersive X-ray Spectroscopy (SEM-EDS) results of a sulfide-based solid electrolyte synthesized according to Example of the present disclosure. More specifically, FIGS. 3 and 4 show SEM-EDS results of the solid electrolyte (Li_{5.5}P_{0.9}Bi_{0.1}S_{4.375}O_{0.125}Cl_{1.5}) synthesized in Example 2 above. Referring to FIGS. 3 and 4, it may be confirmed that Bi is uniformly distributed. More specifically, in FIG. 3, it was confirmed that the prepared sulfide-based solid electrolyte has a uniform particle size. In addition, in FIG. 4, it was confirmed that Bi is uniformly included throughout the sulfide-based solid electrolyte. That is, it was confirmed that Bi is not present only in a portion of the sulfide-based solid electrolyte, but is uniformly present throughout the sulfide-based solid electrolyte, and the distribution thereof is substantially similar to that of P.

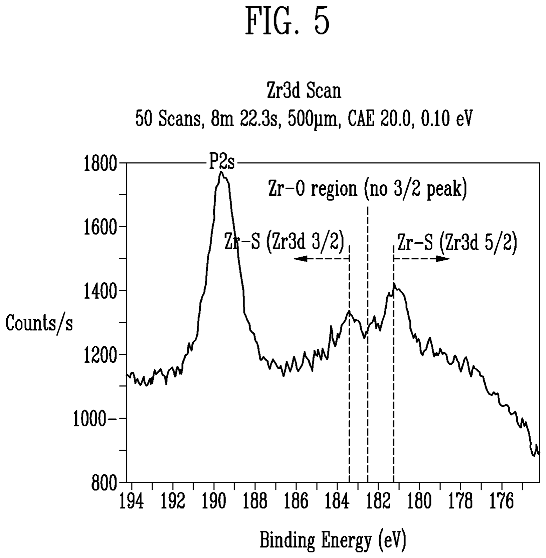

FIG. 5 shows X-ray Photoelectron Spectroscopy (XPS) surface analysis results for a sulfide-based solid electrolyte synthesized according to Example of the present disclosure. In FIG. 5, the sulfide-based solid electrolyte according to Example 11 was analyzed. Referring to FIG. 5, a Zr-S bond peak was observed on the surface, while a Zr-O peak was not detected. This indicates that the Zr added in the sulfide-based solid electrolyte according to the present disclosure was substituted at P sites. It was also confirmed that oxygen (O) was substituted at sulfur (S) sites in PS₄ unit corresponding to 16e sites.

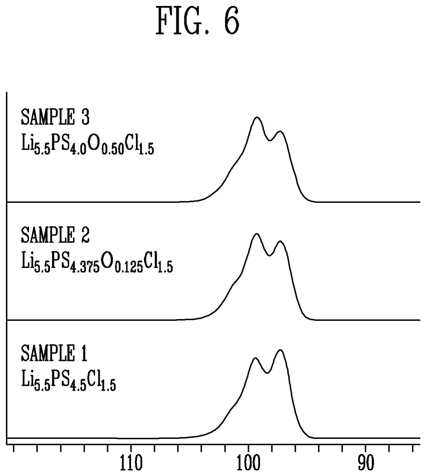

FIG. 6 shows Phosphorus-31 Magic Angle Spinning Nuclear Magnetic Resonance (³¹P-MAS NMR) measurement results for sulfide-based solid electrolytes synthesized in Examples of the present disclosure and Comparative Example. Specifically, in FIG. 6, ³¹P-MAS NMR was measured for the sulfide-based solid electrolytes according to Comparative Example (Sample 1: Li_{5.5}PS_{4.5}Cl_{1.5}) , Example 5 (Sample 2: Li_{5.5}PS_{4.375}O_{0.125}Cl_{1.5}), and Example 7 (Sample 3: Li_{5.5}PS_{4.0}O_{0.50}Cl_{1.5}) to confirm a molar ratio of Cl element. Table 2 below shows the results of deconvolution integral values of ³¹P-MAS NMR.

**[Table 2]**

| Category | P1% | P2% | P3% |
|---|---|---|---|
| Comparative Example (Sample 1) | 23.0 | 33.3 | 43.7 |
| Example 5 (Sample 2) | 25.6 | 36.6 | 37.8 |
| Example 7 (Sample 3) | 27.8 | 37.2 | 35.0 |

Referring to FIG. 6 and Table 2, it may be seen that, the deconvolution integral values, their ratios, and peak shapes are well-matched when the Cl_{1.5} composition in the sulfide-based solid electrolytes of Examples 5 and 7 is compared with those illustrated in FIG. 2C.

Referring to FIG. 6, no peaks resulting from oxygen doping were observed, and it may be seen that the structures corresponding to P1, P2, and P3 are separated. That is, the structure corresponding to P3 is present in a high proportion, which may indicate that ionic conductivity is high.

### (2) Ionic Conductivity and Moisture Stability

Ionic conductivity was measured and moisture stability was calculated for the sulfide-based solid electrolytes according to Examples 1 to 11 and Comparative Example above.

The ionic conductivity was measured after exposing the electrolyte to a dew point of -50 °C for 1 hour in a sealed tempered glass box of a specific size. As for the measurement conditions, a potentiostat (manufactured by BioLogic) was used, and the measurement was performed at 10 mV from a start frequency of 7 MHz to an end frequency of 100 Hz.

Moisture stability (ionic conductivity retention) was derived by comparing the ionic conductivity of the sulfide-based solid electrolyte after and before exposure to a moisture-controlled (dew point -50 °C) environment. 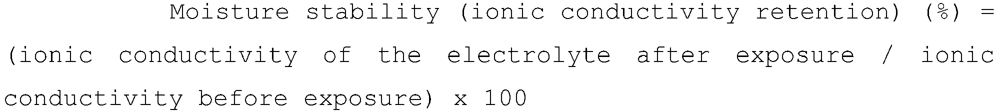 Moisture stability (ionic conductivity retention) (%) = (ionic conductivity of the electrolyte after exposure / ionic conductivity before exposure) x 100

**[Table 3]**

| Category | Chemical Formula | Ionic Conductivity (mS/cm) | Moisture Stability (Ionic Conductivity Retention) |
|---|---|---|---|
| Example 1 | Li_{5.5}P_{0.95}Bi_{0. 05}S_{4.325}O_{0.125}C I_{1.5} | 6.8 | 78% |
| Example 2 | Li_{5.5}P_{0.9}Bi_{0.1}S_{4.375}O_{0.125}Cl 1.5 | 6.1 | 76% |
| Example 3 | Li_{5.5}P_{0.8}Bi_{0.2}S_{4.175}O_{0.125}Cl 1.5 | 4.6 | 68% |
| Example 4 | Li_{5.5}PS_{4.4375}O_{0.0625}Cl_{1.5} | 7.1 | 72% |
| Example 5 | Li_{5.5}PS_{4.375}O_{0.125}Cl_{1.5} | 7.2 | 73% |
| Example 6 | Li_{5.5}PS_{4.25}O_{0.25}Cl_{1.5} | 6.5 | 73% |
| Example 7 | Li_{5.5}PS_{4.0}O_{0.50}Cl_{1.5} | 4.2 | 75% |
| Example 8 | Li_{5.5}P_{0.95}Bi_{0.05}S_{4.45}Cl_{1.5} | 6.3 | 71% |
| Example 9 | Li_{5.5}P_{0.9}Bi_{0.1}S_{4.4}Cl_{1.5} | 5.8 | 69% |
| Example 10 | Li_{5.5}P_{0.8}Bi_{0.2}S_{4.3}Cl_{1.5} | 3.8 | 67% |
| Example 11 | Li_{5.5}P_{0.952}Zr_{0.05}S_{4.325}O_{0.125}C I_{1.5} | 6.6 | 75% |
| Comparative Example | Li_{5.5}PS_{4.5}Cl_{1.5} | 6.5 | 63% |

Referring to Table 3 above, it may be seen that in Examples 1 to 11, Bi or Zr is partially substituted at P sites, resulting in strengthened bonding and improved moisture stability.

### (3) Rate Capability

A secondary battery cell, which is an all-solid-state battery, was prepared using the solid electrolytes according to Examples 1, 2, 11 and Comparative Example above.

Charge and discharge evaluation of the secondary battery cell was carried out in a chamber at 25 °C. The evaluation was conducted at 0.1C (2 cycles) → 0.2C (2 cycles) → 0.33C (2 cycles) → 0.5C (2 cycles) → 1C (2 cycles), where the 1C rate corresponds to 3.25 mAh/cm². Charging was performed in a constant current-constant voltage (CC-CV) mode with a cut-off voltage of 4.2 V, and discharging was performed in a constant current (CC) mode with a cut-off voltage of 3.1 V. When the first-cycle discharge capacity at 1C relative to the first-cycle discharge capacity at 0.1C is expressed as rate capability (%, 1C/0.1C), the results are shown in Table 4 below.

**[Table 4]**

| Category | Comparative Example | Example 1 | Example 2 | Example 11 |
|---|---|---|---|---|
| Loading (mAh/cm²) | 3.1 | 3.1 | 3.1 | 3.1 |
| Rate Capability (% 1C/0.1C) | 75.1 | 78.4 | 78.0 | 81.5 |

Referring to Table 4 above, it was confirmed that the solid electrolytes of Examples 1, 2, 11 and Comparative Example have similar ionic conductivity, but the rate capability is higher in Examples 1, 2, and 11 compared to Comparative Example. In particular, it may be confirmed that the rate capability is improved in Example 11 due to improved interfacial stability with the positive electrode.

It is understood by those skilled in the art that the plurality of exemplary embodiments described above are specific examples of the following aspects.

Aspect 1.A sulfide-based solid electrolyte represented by Chemical Formula 1 below and having an argyrodite crystal structure:

[Chemical Formula 1] Li₇₋ₐP_{1-y}M_{y}S_{4.5-b-y}O_{b}Xₐ

wherein in Chemical Formula 1, M is bismuth (Bi) or zirconium (Zr), X is one or more halogen elements, 1 ≤ a ≤ 2, 0 ≤ b < 1, and 0 ≤ y < 0.5 (provided that a case where both b and y are 0 is excluded).

Aspect 2. The sulfide-based solid electrolyte of aspect 1, wherein the argyrodite crystal structure includes BiS₄ or ZrS₄.

Aspect 3. The sulfide-based solid electrolyte of aspect 1 or 2, wherein oxygen (O) is substituted at a 16e site of sulfur (S) in the crystal structure.

Aspect 4. The sulfide-based solid electrolyte according to any one of the previous aspects, wherein the argyrodite crystal structure includes PS₃O or PS₂O₂.

Aspect 5. The sulfide-based solid electrolyte according to any one of the previous aspects, wherein the sulfide-based solid electrolyte is a sulfide-based solid electrolyte represented by Chemical Formula 2 or Chemical Formula 3 below:

[Chemical Formula 2] Li₇₋ₐP_{1-y}Bi_{y}S_{4.5-b-y}O_{b}Xₐ

[Chemical Formula 3] Li₇₋ₐP_{1-y}Zr_{y}S_{4.5-b-y}O_{b}Xₐ

wherein in Chemical Formulae 2 and 3, X is one or more halogen elements, 1 ≤ a ≤ 2, 0 ≤ b < 1, and 0 < y < 0.5.

Aspect 6.The sulfide-based solid electrolyte according to any one of the previous aspects, wherein a sum of b and y is less than 0.5 (b + y < 0.5).

Aspect 7. The sulfide-based solid electrolyte according to any one of the previous aspects, wherein a is from 1.5 to 2.

Aspect 8.The sulfide-based solid electrolyte according to any one of the previous aspects, wherein the sulfide-based solid electrolyte is a sulfide-based solid electrolyte represented by Chemical Formula 4 below:

[Chemical Formula 4] Li₇₋ₐP_{1-y}M_{y}S_{4.5-b-y}O_{b}X1₂₋ₐ₂X2ₐ₂

wherein in Chemical Formula 4, M is bismuth (Bi) or zirconium (Zr), X1 is Cl, X2 is Br, 1 ≤ a ≤ 2, 0 ≤ b < 1, 0 ≤ y < 0.5, and 0 ≤ a2 ≤ 2 (provided that a case where both b and y are 0 is excluded).

Aspect 9. The sulfide-based solid electrolyte according to any one of the previous aspects, wherein Chemical Formula 1 is Li₇₋ₐP_{1-y}M_{y}S_{4.5-b-y}O_{b}Clₐ, Li₇₋ₐP_{1-y}Bi_{y}S_{4.5-b-y}O_{b}Clₐ, Li₇₋ₐP_{1-y}Zr_{y}S_{4.5-b-y}O_{b}Clₐ, Li_{5.5}P_{1-y}M_{y}S_{4.5-b-y}O_{b}Cl_{1.5}, Li_{5.5}P_{1-y}Bi_{y}S_{4.5-b-y}O_{b}Cl_{1.5}, or Li_{5.5}P_{1-y}Zr_{y}S_{4.5-b-y}O_{b}Cl_{1.5}.

Aspect 10. The sulfide-based solid electrolyte according to any one of the previous aspects, wherein the sulfide-based solid electrolyte comprises lithium (Li), phosphorus (P), sulfur (S), and a halogen element, at least some of sites of the phosphorus (P) are substituted with one or more of bismuth (Bi) and zirconium (Zr), at least some of sites of the sulfur (S) are substituted with oxygen (O), and a molar ratio of the lithium (Li) to the halogen element (lithium: halogen element) is 7-a: a (1 ≤ a ≤ 2).

Aspect 11. A method of preparing a sulfide-based solid electrolyte represented by Chemical Formula 1 below, the method comprising: mixing and pulverizing lithium sulfide (Li₂S), phosphorus pentasulfide (P₂S₅), a lithium halide (LiX), and elemental sulfur (S); and one or more of bismuth trioxide (Bi₂O₃) or zirconium tetrachloride (ZrCl₄) in an inert atmosphere; and heat-treating a pulverized material in an inert atmosphere,

[Chemical Formula 1] Li₇₋ₐP_{1-y}M_{y}S_{4.5-b-y}O_{b}Xₐ

wherein in Chemical Formula 1, M is bismuth (Bi) or zirconium (Zr), X is one or more halogen elements, 1 ≤ a ≤ 2, 0 ≤ b < 1, and 0 ≤ y < 0.5 (provided that a case where both b and y are 0 is excluded).

Aspect 12. An all-solid-state battery comprising the sulfide-based solid electrolyte according to any one of the aspects 1 to 10.

Since the present disclosure may be implemented in various forms, the scope of the present disclosure is not limited to the above-described embodiments. Therefore, as long as a modified embodiment includes components of the appended claims of the present disclosure, it should be considered to fall within the scope of the present disclosure.

## Claims

1. A sulfide-based solid electrolyte represented by Chemical Formula 1 below and having an argyrodite crystal structure:
[Chemical Formula 1] Li₇₋ₐP_{1-y}M_{y}S_{4.5-b-y}O_{b}Xₐ
wherein in Chemical Formula 1,
M is bismuth (Bi) or zirconium (Zr), X is one or more halogen elements, 1 ≤ a ≤ 2, 0 ≤ b < 1, and 0 ≤ y < 0.5 (provided that a case where both b and y are 0 is excluded).

2. The sulfide-based solid electrolyte of claim 1, wherein the argyrodite crystal structure includes BiS₄ or ZrS₄.

3. The sulfide-based solid electrolyte of claim 1 or 2, wherein oxygen (O) is substituted at a 16e site of sulfur (S) in the crystal structure.

4. The sulfide-based solid electrolyte according to any one of the previous claims, wherein the argyrodite crystal structure includes PS₃O or PS₂O₂.

5. The sulfide-based solid electrolyte according to any one of the previous claims, wherein the sulfide-based solid electrolyte is a sulfide-based solid electrolyte represented by Chemical Formula 2 or Chemical Formula 3 below:
[Chemical Formula 2] Li₇₋ₐP_{1-y}Bi_{y}S_{4.5-b-y}O_{b}Xₐ
[Chemical Formula 3] Li₇₋ₐP_{1-y}Zr_{y}S_{4.5-b-y}O_{b}Xₐ
wherein in Chemical Formulae 2 and 3, X is one or more halogen elements, 1 ≤ a ≤ 2, 0 ≤ b < 1, and 0 < y < 0.5.

6. The sulfide-based solid electrolyte according to any one of the previous claims, wherein a sum of b and y is less than 0.5 (b + y < 0.5).

7. The sulfide-based solid electrolyte according to any one of the previous claims, wherein a is from 1.5 to 2.

8. The sulfide-based solid electrolyte according to any one of the previous claims, wherein the sulfide-based solid electrolyte is a sulfide-based solid electrolyte represented by Chemical Formula 4 below:
[Chemical Formula 4] Li₇₋ₐP_{1-y}M_{y}S_{4.5-b-y}O_{b}X1₂₋ₐ₂X2ₐ₂
wherein in Chemical Formula 4,
M is bismuth (Bi) or zirconium (Zr), X1 is Cl, X2 is Br, 1 ≤ a ≤ 2, 0 ≤ b < 1, 0 ≤ y < 0.5, and 0 ≤ a2 ≤ 2 (provided that a case where both b and y are 0 is excluded).

9. The sulfide-based solid electrolyte according to any one of the previous claims, wherein Chemical Formula 1 is Li₇₋ₐP_{1-y}M_{y}S_{4.5}-_{b-y}O_{b}Clₐ, Li₇₋ₐP_{1-y}Bi_{y}S_{4.5-b-y}O_{b}Clₐ, Li₇₋ₐP_{1-y}Zr_{y}S_{4.5-b-y}O_{b}Clₐ, Li_{5.5}P_{1-y}M_{y}S_{4.5-b-y}O_{b}Cl_{1.5}, Li_{5.5}P_{1-y}Bi_{y}S_{4.5-b-y}O_{b}Cl_{1.5}, or Li_{5.5}P_{1-y}Zr_{y}S_{4.5-b-y}O_{b}Cl_{1.5.}

10. The sulfide-based solid electrolyte according to any one of the previous claims, wherein the sulfide-based solid electrolyte comprises lithium (Li), phosphorus (P), sulfur (S), and a halogen element, at least some of sites of the phosphorus (P) are substituted with one or more of bismuth (Bi) and zirconium (Zr), at least some of sites of the sulfur (S) are substituted with oxygen (0), and a molar ratio of the lithium (Li) to the halogen element (lithium: halogen element) is 7-a: a (1 ≤ a ≤ 2).

11. A method of preparing a sulfide-based solid electrolyte represented by Chemical Formula 1 below, the method comprising:
mixing and pulverizing lithium sulfide (Li₂S), phosphorus pentasulfide (P₂S₅), a lithium halide (LiX), and elemental sulfur (S); and one or more of bismuth trioxide (Bi₂O₃) or zirconium tetrachloride (ZrCl₄) in an inert atmosphere; and
heat-treating a pulverized material in an inert atmosphere,
[Chemical Formula 1] Li₇₋ₐP_{1-y}M_{y}S_{4.5-b-y}O_{b}Xₐ
wherein in Chemical Formula 1,
M is bismuth (Bi) or zirconium (Zr), X is one or more halogen elements, 1 ≤ a ≤ 2, 0 ≤ b < 1, and 0 ≤ y < 0.5 (provided that a case where both b and y are 0 is excluded).

12. An all-solid-state battery comprising the sulfide-based solid electrolyte according to any one of the claims 1 to 10.
